# EUROPEAN PATENT APPLICATION

(11) **EP 1 521 176 A1**
(43) Date of publication of application: **06.04.2005**
(21) Application number: 03021987.7
(22) Date of filing: 30.09.2003
(51) Int. Cl.: G06F 9/46

(54) **Device and method for rendering data**

(71) Applicant: Sony Ericsson Mobile Communications AB, 221 88 Lund (SE)
(72) Inventor: Foxenland, Eral, 254 41 Helsingborg (SE)
(74) Representative: Petri, Stellan

(57) **Abstract**

A method and an electronic device (1) for rendering a main sequence of digital data and a sub sequence of digital data being associated with the main sequence. In response to activating a certain key of a keypad (10) of the electronic device (1), execution of the main sequence is interrupted and the sub sequence is executed. When the sub sequence has been executed, execution of the main sequence is resumed where it was interrupted.

## Description

### Technical Field of the Invention

The present invention relates to a device and method for rendering a sequence of data, and more specifically a method for rendering a first and a second sequence of data alternately in dependence of activation of an input interface of an electronic device.

### Description of Related Art

Portable electronic devices more frequently comprises games, images, and audio data, which may be prestored by the manufacturer of the device or which may be downloaded to the device from a remote source. Games may be played on a variety of electronic devices, such as a computer, a mobile radio terminal, a communicator, an electronic organizer, or a smartphone. An image may be set as a background image of a display of the device. Images may be pleasant to look at for a while but they tend to be a bit boring due to their static nature.

Contrary to the pictures are games more entertaining. However, the games have more or less complicated rules for determining how they should be executed to achieve a certain result. Depending on the skill of the user, e.g. which keys are actuated in a predetermined time period, the end result may differ significantly. E.g. a certain key may have to be actuated for to achieve a certain result, which the user has to have knowledge of before starting the game to be successful. Thus, even the simplest game requires some sort of learning. Also, the end result is almost always different, wherein the program instructions that are executed require a high processing capability. Thus, playing a game requires a considerable amount of battery capacity. At the same time, a portable electronic device has limited battery resources.

Moreover, when games are provided in portable electronic devices they are often accessed through a menu structure. It is not instant and may be too complicated for many users to access and learn. Thus, some users use the electronic device to interact with to pass time, while others do not see it as a tool for passing time as looking at the background image is not stimulating and playing a game is too complicated.

### Summary of the Invention

It is an object of the invention to provide a method for interacting with an electronic device to execute digital data being non-static when displayed, which digital data requires less processing capability than an electronic game.

This object is achieved by a method according to the invention for executing a first and a second sequence of digital data in an electronic device having an input interface comprising at least one input means. According to the invention, a main sequence of digital data is initiated and executed, activation of at least one input means is sensed, execution of said main sequence is interrupted in response to said sensing, and at least one sub sequence of digital data being associated with said main sequence is initiated and executed when execution of the main sequence has been interrupted.

A resume flag may be set at a position of the main sequence where its execution is interrupted, and when the execution of the sub sequence is ended, execution of the main sequence may be resumed at said position. Furthermore, execution of the main sequence and/or the sub sequence may be iterated a predetermined number of times or during a predetermined time period.

The input interface may comprise several input means. Thus, according to the method a specific input means, or a combination of specific input means, being activated is identified, and a certain sub sequence to be initiated, which is associated with said identified specific input means or combination of specific input means, is retrieved from a memory to be rendered.

The main sequence and the sub sequence may comprise digital image or audio data.

According to the method, digital data comprising a main sequence identity, at least one position wherein the execution of the main sequence is to be interrupted and at least one identity of a sub sequence to be executed at said interruption may be saved. Alternatively, digital data of the main sequence and at least one sub sequence as they are rendered are saved. Thus, a specific rendering of a main sequence and at least one sub sequence may be recorded and rendered. Furthermore, said saved digital data may be transmitted to an external electronic device.

It is another object of the invention to provide an electronic device with which a user may interact to execute digital data being non-static when displayed, which data requires less processing capability than an electronic game.

This object is achieved by an electronic device according to the invention comprising an input interface having at least one input means, and an output interface. An initiation unit for initiating execution of a main sequence of digital data, a sensing unit adapted to sense the activation of at least one input means, and an interrupt unit adapted to interrupt execution of said main sequence is provided. The initiation unit is further adapted to initiate execution of at least one sub sequence of digital data being associated with the main sequence when the interrupt unit has interrupted the execution of the main sequence.

A counter, which is arranged to count the number of executed iterations of the main sequence and/or the sub sequence, or which is arranged determine a time period during which the main sequence has been executed may be provided. Thus, the interrupt unit may be arranged to interrupt execution of the main sequence when a predetermined number of iterations or a predetermined time period has been reached.

The electronic device may comprise several input means and a memory. The sensing unit may be adapted to identify a specific input means being activated, and the processor may be adapted to retrieve from said memory a certain sub sequence to be initiated, which is associated with said specific input means.

A memory for saving at least parts of said main sequence and/or parts of said sub sequence, or information thereof, as they are rendered may be provided. Furthermore, a communication unit for transmitting said saved parts of the main sequence and/or the sub sequence may be provided.

The electronic device may be provided as a mobile radio terminal, a pager, a communicator, an electronic organizer, a smartphone, or a mobile telephone.

A third object of the invention is to provide a computer program product having computer readable instructions for carrying out the method of the invention.

This object is achieved by a computer program product embodied on a computer readable medium, comprising computer readable instructions for carrying out the method according to the invention when run by an electronic device having digital computer capabilities.

It is an advantage of the invention that a user may use the electronic device having a function that is interactive, explorative, instant and easy to access and extremely easy to use. Furthermore, it is an advantage of the invention that it requires less processing capability and battery capacity than playing a game.

Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a front view of a mobile terminal connected to external communication devices;
Fig. 2 is a block diagram of the mobile terminal;
Fig. 3a is flow chart of a first embodiment of the method according to the invention; and
Fig. 3b is a flow chart of a sub procedure of the method of Fig. 3a.

### Detailed Description of Embodiments

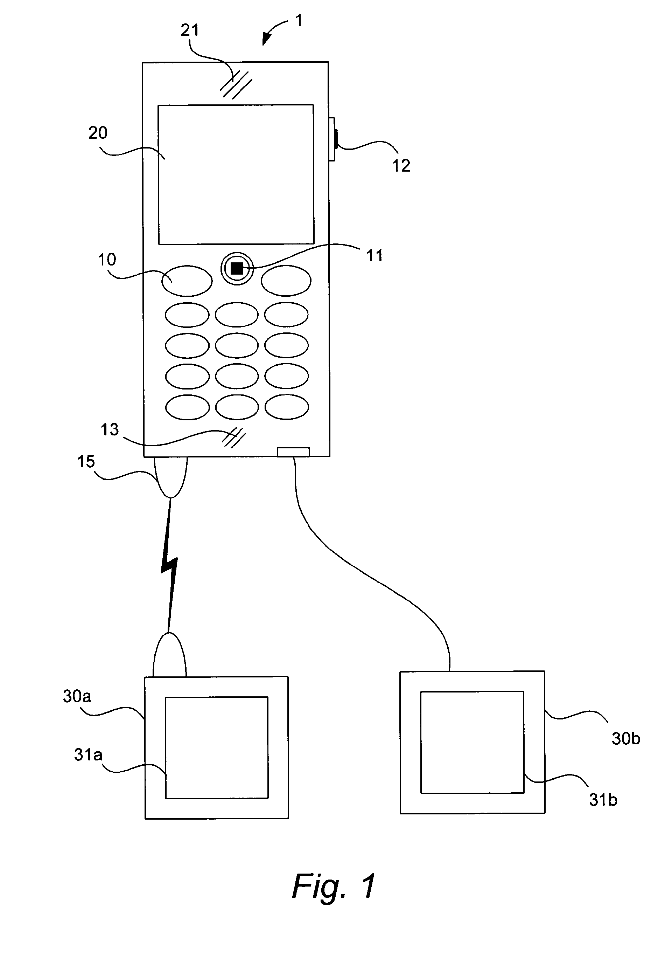

Fig. 1 illustrates an electronic device embodied as a mobile terminal 1. The invention is not limited to a mobile terminal 1, but can be incorporated into any electronic device having an output interface and an input interface, with which a user interacts. An electronic device according to the invention comprises, but is not limited to, a mobile radio terminal, a mobile telephone, a pager, a personal digital assistant (PDA), and a communicator, i.e. a smartphone or an electronic organizer. For convenience, reference to a mobile terminal 1 will be made throughout this description.

The present invention provides a function wherein e.g. an interactive background animation may be rendered. The animation is provided by executing a sequence of digital data or instructions in a main sequence, wherein the animation may be displayed over again. When an input means of an input interface is activated, the execution of the main sequence is interrupted, and a sub sequence of digital data related to the main sequence is executed instead. When the sub sequence is ended, the main sequence may be resumed where it was interrupted.

The mobile terminal 1 comprises an input interface, through which a user may interact with the mobile terminal 1, and use to activate sub sequences as will be explained below. The input interface comprises one or several input means for activating one or several different sub sequences.

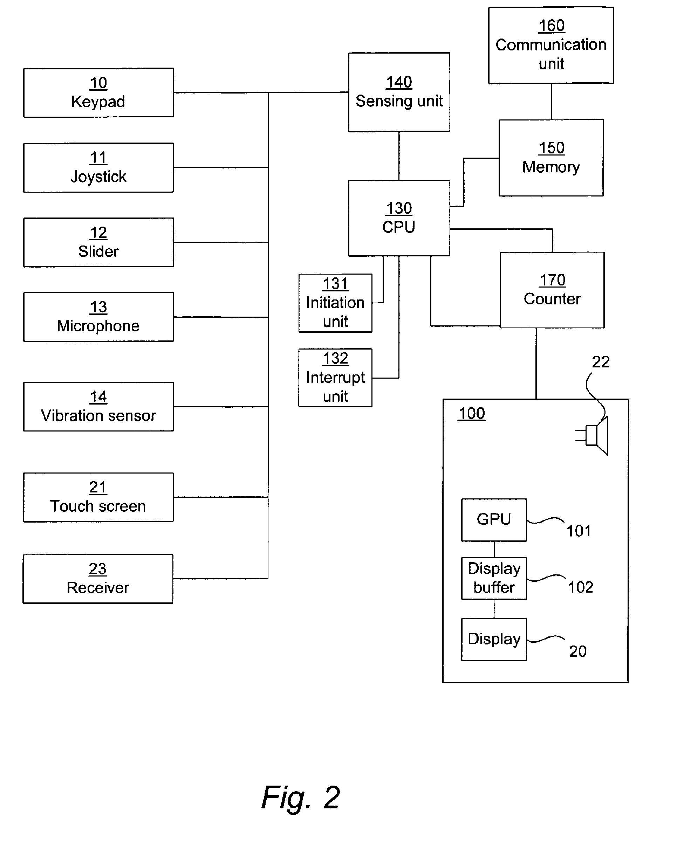

The input means may comprise, but are not limited to, a keypad 10, a joystick 11, a slider 12, a microphone 13 and a vibration sensor 14 (Fig. 2), a touch screen 15 (Fig. 2) or touch pad, a rocker key, and actuation keys, such as a camera, a volume, or an auxiliary key. The actuation keys may during conventional use of the mobile terminal 1 be used for accessing certain functions or executing commands, such as increasing/decreasing the volume, taking a picture, or entering different communication modes, such as data or voice communication modes.

The keypad 10 comprises conventional keys for establishing and terminating a call, such as numerical keys "1, 2,..., 9", a "yes" and a "no" key. Further, the keypad 10 may comprise additional keys, such as a "#", a "*", a "clear", a "return", or any other key for entering or retrieving information into/from the mobile terminal 1. The numerical keys may also be used for accessing and/or executing different functions of the terminal, such as playing a game or providing a key lock/unlock function. The numerical keys may also comprise letters for composing a text message. Each key may be associated with a certain sub sequence.

The joystick 11 may be provided for navigating between different functions of the mobile terminal 1. Alternatively, the user navigates to a specific function with conventional push keys having an up/down function. The joystick 11 may also be used for navigating within menus. Selection within the menus may also be provided by actuation of the joystick if it has a push function.

One or several sliders 12 may be provided at any side of the mobile terminal 1. The slider 12 may also be used as a shortcut to access and execute certain functions directly without the need of entering said function by navigating through menus of the display, such as a volume function. The slider 12 may alternatively be substituted by push buttons arranged at any side of the mobile terminal 1. Arranging said push buttons on another side than the keypad 10 has the advantage that they can be easily distinguished from the keys of the conventional keypad 10.

The microphone 13 may be used for registering the voice of the user during an ongoing call, recording a voice message, requesting a service through voice activation, such as the establishment or answering of an outgoing/incoming call. Also, the microphone 13 may be used for activating a sub sequence according to the invention.

The vibration sensor 14 may sense vibrations caused by the user of the mobile terminal 1. The vibrations may originate when the user deliberately shakes the mobile terminal 1 so as to start execution of e.g. a sub sequence according to the invention.

The mobile terminal 1 comprises an output interface 100 for presenting information and data to a user. The input interface 100 comprises a display 20, which may be a conventional display for presenting information, such as presentation of a telephone number, remaining battery capacity, connectivity, function menus, icons, still/moving images etc. The display 20 may be a monochrome or a color display. Furthermore, the display may be a touch screen type display 21 (Fig 2), on which the user may enter data into the mobile terminal 1 by writing directly on the screen with a suitable input device, such as a pen having a blunt plastic point. Thus, the display 20 may be part of both the output interface and the input interface. Also, the mobile terminal 1 may comprise several displays provided at different portions of the terminal, which interact in operation. A clamshell or foldable mobile terminal may have one display on the outside of the housing, and one that will appear when said terminal is opened for operation.

The input interface may comprise a loudspeaker 22 for listening to the voice of an incoming call, listening to music, presenting sound of a game, rendering a recorded voice, etc. An audio controller may automatically order or execute any change of the volume/bas/treble in dependence of sensed activation of an input means. The change may be provided during a certain period of time, corresponding to rendering a sub sequence.

The mobile terminal 1 may also comprise a communication interface for communicating with an external electronic device 30a, 30b or a communication network. The communication interface may comprise a wireless and/or wire based interface. The wireless communication interface may comprise one or several antennas 15 and be arranged to communicate with the external device 30a via a wireless communication system, such as a telecommunication system according to any communication technique, e.g. a TDMA (Time Division Multiple Access) FDMA (Frequency Division Multiple Access), or CDMA (Code Division Multiple Access) technique. Also, the communication interface may be adapted for communication over a short range supplementary frequency, such as a WLAN (Wireless Local Area Network), e.g. a Bleutooth® frequency. The communication interface may also comprise means, e.g. an accessory connector, for connecting the mobile terminal 1 to the external device 30b by means of a wire, such as a series cable.

Other wireless or wire based communication interfaces are also possible, such as an IR (Infrared) connection.

The communication interface may comprise a receiver 23 (Fig. 2) and a transmitter for transmitting voice, data, and other messages, such as messages comprising information regarding main and sub sequences.

The receiver 23 of the communication interface may be part of the input interface. Then, activation of the receiver, which is triggered by an entity external to the mobile terminal 1 itself, e.g. a communication network, may be sensed. Activation triggered by an external device may comprise receiving a message, an incoming call, or any other data, such as data relating to a WAP (Wireless Application Protocol) data.

The external electronic device 30a, 30b comprises an output interface, such as a display 31a, 31b, for displaying information to a user. The output interface may comprise the same output means as the mobile terminal 1. Thus, instead of, or in addition to, rendering the data of the main and sub sequence by means of the output interface of the mobile terminal 1 itself, said data may be transmitted to the external device 30a, 30b. Thus, the data to be rendered may be processed by the mobile terminal 1 but rendered by the external device 30a, 30b. As is understood, the external device 30a, 30b may also comprise an input interface corresponding to the input interface of the mobile terminal 1.

Fig. 2 illustrates the input interface of the mobile terminal 1 of Fig. 1 connected to a sensing unit 140. The sensing unit 140 is connected to a controller 130, which may be provided as a CPU (central processing unit), a microprocessor, or ASIC (Application Specific Integrated Circuit). The controller 130 is connected to a memory 150, such as a RAM (Random Access Memory) and/or a ROM (Read Only Memory) for storing any information. Moreover, the controller 130 is connected to the output interface 100, which is adapted to provide information to the user.

The output interface 100 may comprise one or several controllers for controlling a certain setting or function of the mobile terminal 1 and the output interface. A graphical output interface may comprise a graphics processing unit (GPU) 101 having information regarding objects that shall be presented on the display 13, such as a background animation. The controllers of the output interface, such as the GPU 101, may be provided as a separate hardware component, e.g. as a processor, a DSP (Digital Signal Processor), an ASIC (Application Specific Integrated Circuit), a FPGA (Field-Programmable Gate Array), hard-wired logic, etc. Alternatively, the controllers are software-implemented means, which are provided by software readable code portions to be run by a processor. The graphical output interface may also comprise a buffer 102, wherein digital data, such as animation images or audio data, are stored before being rendered. The display buffer 102 may comprise separate buffers for the main sequence and the sub sequence. In the buffer for the main sequence, an interrupt flag may be set, as will be explained below. The buffer 102 is connected to the GPU 101. The GPU 101 may be adapted for presenting still and/or moving images on the display 20.

The controller 130 is connected to a communication unit 160 comprising a transmitter and possibly the receiver 23, which is provided for communicating with the communication network or directly with the external device 30a, 30b. In Fig. 2 the receiver 23 is provided separately for illustrative purposes, as it may be part of the input interface. The communication unit 160 is connected to the antenna 15 for communication using a telecommunication frequency, such as GSM or WCDMA frequency, and/or a short-range complementary frequency, such as a WLAN frequency.

A counter 170 is connected to the controller 130. The counter 170 is arranged to count the number of consecutive times a main sequence has been iterated, and notify the controller when a predetermined number of iterations has been reached. Alternatively, the counter may register the time, during which the main sequence has been executed, and notify the controller 130 when a predetermined time period has been reached.

The sensing unit 140, to which the input means of the input interface are connected, is adapted to sense or register the activation of a certain input means. When the activation is sensed, execution of a main sequence of digital data or digital instructions may be interrupted. The digital data of the main sequence may comprise a background animation, i.e. a series of consecutive digital images which will provide a moving picture when displayed. Alternatively, the digital data of the main sequence may comprise audio data. When the execution of the data of the main sequence is interrupted, a sub sequence comprising digital data or instructions associated with the main sequence are executed or rendered. If a background animation is provided, the sub sequence may provide alternative digital images to complement the images of the main sequence. E.g. a skateboarder going back and forth in a skateboard ramp may be displayed by the images of the main sequence, wherein each sequence comprises images for displaying e.g. one lap in the ramp. The sub sequence may then comprise images displaying a trick made by the skateboarder. The trick is triggered by the activation of the input means. When the trick has been rendered, the main sequence may be resumed where it was interrupted. Alternatively, the execution of the main sequence is not resumed when the sub sequence has been rendered. Each sub sequence may be dependent on a specific input means being activated, or a combination of input means being activated substantially simultaneously, and/or the position of the sub sequence where it is interrupted. Also, the different sub sequences may be executed randomly independently of which input means is activated. Similarly, if the main sequence comprises audio data, the sub sequence may comprise different audio data, such as a solo by a specific instrument depending on the specific activated input means and/or where the execution of main sequence is interrupted.

The sensing unit 140 may be provided by hardware or software according to the same principles as the GPU 101. Alternatively, the sensing unit 140 is provided as an integral part of the controller 130.

When the activation of a certain input means has been sensed, the controller 130 may indicate the specific used input means to the output interface 100, which will retrieve and render a sub sequence from the memory 150 accordingly. Alternatively, the controller 130 itself retrieves from the memory 150 the sub sequence, which is forwarded to the output interface 100.

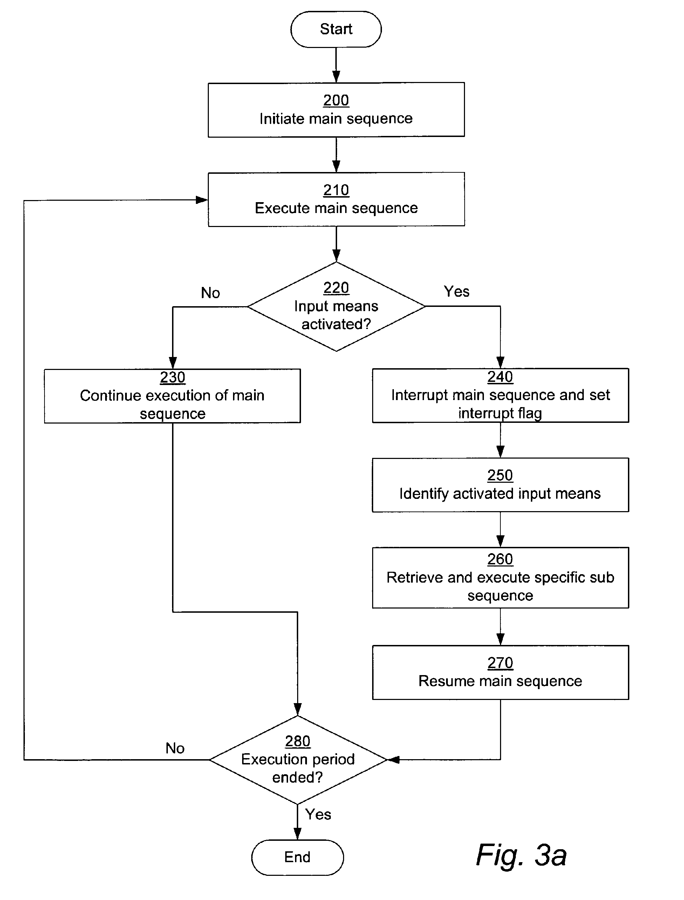

Fig. 3a illustrates one embodiment for carrying out the method according to the invention. In a first step 200 the execution of main sequence is initiated. The initiation may be executed by selecting a specific icon or menu. Alternatively, the execution of the main sequence is initiated by pressing a specific key or key combination of e.g. the keypad 10. The initiation may also comprise retrieving from the memory 150 the main sequence, which is forwarded to the buffer 102.

Step 210 follows the initiation, wherein the main sequence is executed or rendered. E.g. images of an animation may be displayed in a consecutive order to provide a moving picture.

To provide initiation of the sub sequence according to the invention, activation of any of the input means has to be checked by the sensing unit 140 regularly during the execution of the main sequence. Thus, in step 220 it is determined whether any of the input means is activated. This determination may be executed at predetermined time intervals during the execution of main sequence. Alternatively, the determination of step 220 is made after a full execution of the main sequence.

If the answer in step 220 is no, the procedure proceeds to step 230, wherein the execution of the main sequence is continued.

If the answer in step 220 is yes, the procedure proceeds to step 240, wherein the execution of the main sequence is interrupted. Also, an interrupt flag is set in the buffer 102 at the position of the main sequence wherein its execution is interrupted. The flag may be set at the position of the next data item of the buffer 102 to be displayed or the last data item being displayed.

In step 250 the specific input means being activated is identified, such as a specific key, or combination of keys, of the keypad.

In step 260, the sub sequence associated with the input means identified in step 250 may be retrieved. A lookup table within the memory 150 or a register of the controller 130 or the GPU 101 may provide which input means, or combination of input means, is associated with a specific sub sequence of the main sequence. Thus, the user may at any time default which input means should activate a specific sub sequence. When the specific sub sequence has been retrieved, it may be executed or rendered. Depending on the input means being identified, the sub sequence may be rendered once or a predetermined number of times.

In step 270, after the execution of the sub sequence is ended execution of the main sequence is resumed by starting the main sequence at the position of the interrupt flag.

In step 280 it is determined if the execution period of the main sequence has come to an end. If main sequence is executed a predetermined number of times, the counter 170 keeps track of the number of iterations. Alternatively, the main sequence is executed during a predetermined time period, which the counter 170 keeps track of. If the answer in step 280 is yes, the procedure is ended. Otherwise, the procedure will return to step 210, wherein the main sequence will be executed once again.

It is also possible to record and store the execution of a main sequence and the execution of any number of sub sequences. Then, if a user of the mobile terminal 1 so decides, a recording function may be selected. Information identifying the main sequence and the position within the main sequence at which a specific sub function is to be executed is recorded. A recorded sequence may be transmitted to any external communication device 30a, 30b.

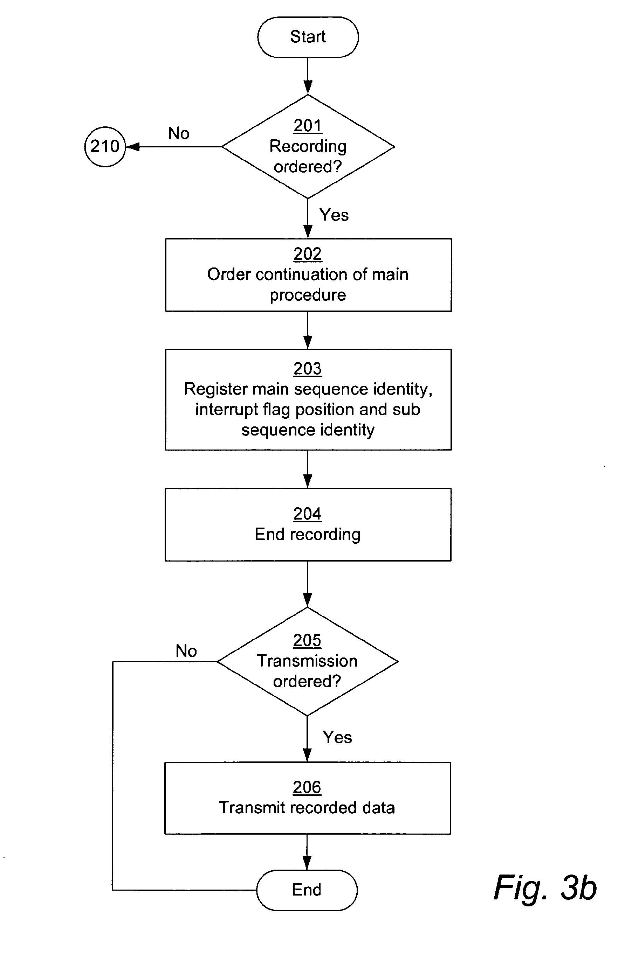

Fig. 3b illustrates an alternative embodiment of the method according to the invention. The steps according to Fig. 3b may be executed after step 200 of Fig. 3a. In step 201 it is determined whether a record function has been selected. If the answer in step 201 is no, the procedure proceeds to step 210, wherein the procedure will continue as described above. However, if the answer in step 201 is yes, a sub procedure will be entered. In step 202 the continuation of the main procedure of Fig. 3a is ordered. In step 203 the identity of the main sequence is registered. The position of the main sequence wherein the interrupt flag is set in step 240 is registered together with the identity of the sub sequence being retrieved in step 260. Alternatively, the digital data of the main sequence and the sub sequence being rendered is recorded as it is read from the buffer 102 and rendered.

Finally, the recording is ended in step 204 when the main procedure of Fig. 3a is ended. Thus, the main sequence and one or several sub sequences as rendered, or information thereof, will be recorded.

In step 205 it is determined if a transmission of the recorded data has been ordered. If the answer is no, the sub procedure is ended. Otherwise, the recorded data is transmitted in step 206 before ended.

The controller 130 may control the overall functionality of the electronic device, or control certain functions related to the invention. An initiation unit 131 for initiating execution of the main and sub sequences, and an interrupt unit 132 for interrupting execution of the main and sub sequences is provided according to the invention. However, the initiation unit and the interrupt unit, as well as the sensing unit 140 and the counter 170, may be provided by the controller 130.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for executing a first and a second sequence of digital data in an electronic device (1) having an input interface comprising at least one input means, **characterized by** the steps of
initiating and executing a main sequence of digital data;
sensing activation of at least one input means;
interrupting execution of said main sequence in response to said sensing; and
initiating and executing at least one sub sequence of digital data being associated with said main sequence when execution of the main sequence is interrupted.

2. The method according to claim 1, wherein the step of initiating comprises the further step of:
setting a resume flag at a position of the main sequence where its execution is interrupted; and
when the execution of the sub sequence is ended resuming execution of the main sequence at said position.

3. The method according to claim 1 or 2, wherein execution of the main sequence and/or the sub sequence is iterated a predetermined number of times or during a predetermined time period.

4. The method according to any of the previous claims, wherein the input interface comprises several input means, the method comprising further the steps of:
identifying a specific input means, or a combination of specific input means, being activated; and
retrieving from a memory (150) a certain sub sequence to be initiated, which is associated with said identified specific input means or combination of specific input means.

5. The method according to any of the previous claims, wherein the main sequence and the sub sequence comprise digital image or audio data.

6. The method according to any of the previous claims, further comprising the step of:
saving digital data comprising a main sequence identity, at least one position wherein the execution of the main sequence is to be interrupted and at least one identity of a sub sequence to be executed at said interruption.

7. The method according to any of the claims 1-5, further comprising the step of:
saving digital data of the main sequence and at least one sub sequence as they are rendered.

8. The method according to claim 6 or 7, further comprising the step of
transmitting said saved digital data to an external electronic device (30a, 30b).

9. An electronic device (1) comprising an input interface having at least one input means, and an output interface (100) **characterized by**
an initiation unit (131) for initiating execution of a main sequence of digital data;
a sensing unit (140) adapted to sense the activation of at least one input means;
an interrupt unit (132) adapted to interrupt execution of said main sequence:
the initiation unit (131) is adapted to initiate execution of at least one sub sequence of digital data being associated with the main sequence when the interrupt unit has interrupted the execution of the main sequence.

10. The device according to claim 9, further comprising a counter (170), which is arranged to count the number of executed iterations of the main sequence and/or the sub sequence, or which is arranged determine a time period during which the main sequence has been executed, the interrupt unit being arranged to interrupt execution of the main sequence when a predetermined number of iterations or a predetermined time period has been reached.

11. The device according to any of the claims 9-10, wherein the electronic device comprises several input means and a memory (150), the sensing unit (140) is adapted to identify a specific input means being activated, and wherein the processor (130) is adapted to retrieve from said memory a certain sub sequence to be initiated, which is associated with said specific input means.

12. The device according to any of the claims 9-11, further comprising a memory (150) for saving at least parts of said main sequence and/or parts of said sub sequence as they are rendered.

13. The device according to claim 12, further comprising a communication unit (160) for transmitting said saved parts of the main sequence and/or the sub sequence.

14. The device according to any of the claims 9-13, wherein the device is a mobile radio terminal, a pager, a communicator, an electronic organizer, or a smartphone.

15. The device according to any of the clams 9-13, wherein the device is a mobile telephone.

16. A computer program product embodied on a computer readable medium, comprising computer readable instructions for carrying out the method according to any of the claims 1-8 when run by an electronic device having digital computer capabilities.
